# EUROPEAN PATENT APPLICATION

(11) **EP 1 519 109 A2**
(43) Date of publication of application: **30.03.2005**
(21) Application number: 04005997.4
(22) Date of filing: 12.03.2004
(51) Int. Cl.: F23C 11/00

(54) **Method and substance for reactive catalytic combustion**

(30) Priority: 29.09.2003 US 675731
(71) Applicant: Rei, Min-Hon, Taipei City, 116 (TW)
(72) Inventor: Rei, Min-Hon, Taipei (TW); Wang, Hang-Fu, Sindian City Taipei County 231 (TW)
(74) Representative: Karl, Frank

(57) **Abstract**

A process of a catalytic combustion is disclosed. The process can be started at a cold temperature and raise to a desired high temperature in a very short time by employing a noble metal catalyst dispersed on a supporting material. Moreover, a method for dispersing a noble metal catalyst used in the catalytic combustion is also disclosed for increasing a specific surface area of the catalyst so as to facilitate the catalytic combustion. Furthermore, a substance including a boron nitride supported noble metal catalyst, a substrate for suspending the catalyst, and a supporting material for dispersing the substrate with the catalyst is also disclosed so that a total surface area of the catalyst can be increased, thereby the catalytic combustion can be initiated in a very short time.

## Description

This is a continuation-in-part application of U.S. patent application Ser. No. 10/287,991 filed on November 4, 2002. This invention relates to a method and a substance for a catalytic combustion, and more particularly to a method and a substance for rapidly catalyzing a combustion reaction.

Vapor phase combustion is notorious for generating nitrogen oxides, NOₓ, which always causes a noxious pollution hazard. Furthermore, during the vapor phase combustion, it losses a large function of the thermal energy thereof through the chimney effect. On the other hand, a catalytic oxidation is a much cleaner type of combustion without yielding nitrogen oxides. However, the catalytic oxidation generally requires a long induction time to initiate the reaction until its exothermic reaction heat can provide enough activation energy to sustain its continuous auto-oxidation. Thus, it always needs to preheat the fuel to a high temperature for shortening the induction period thereof. As a result, the catalytic oxidation reaction is difficult to be used as a heating method for supplying heat to an industrial reactor or facilities. This is because the conventional oxidation catalyst is not reactive enough and is unable to heat up the fuel from the ambient temperature to the desired high temperature in a very short period of time, for example, 10 to 30 minutes.

Consequently, it will need a reactive oxidation catalyst capable of heating up from room temperature to the desired high temperature in a very short time, for example, 10 to 30 minutes, so that the catalytic oxidation reaction can be used for supplying heating to an industrial reactor or facilities. That means the catalyst must be able to cold start a reactor to its desired reaction temperature in a short period of time without external heating source or facility.

Because the defects in the prior art and the demands for a future application of the catalytic combustion, the present invention discloses a method and a substance for rapidly catalyzing the combustion in a short time. Therefore, the combustion can be completed in a rapid and clean way.

It is an object of the present invention to provide a method and substance for a catalytic combustion which can rapidly reach to a high temperature sufficient to initiate another reaction also in a very short time.

In accordance with an aspect of the present invention, a process of a catalytic combustion is provided. The process includes steps of providing a fuel at a first temperature, e.g., room temperature, and contacting the fuel with a noble metal catalyst dispersed on a supporting material so as to raise the fuel to a second temperature, for example, a temperature ranged from 500 to 1000°C, sufficient to initiate the combustion, wherein a raising time from the first temperature to the second temperature is within 15 minutes.

In this process, the fuel can be a methanol or an n-hexane, the noble metal catalyst is a boron nitride supported noble metal catalyst, wherein the noble metal is selected from a group consisting of platinum (Pt), palladium (Pd), rhodium (Rh), Ruthenium (Ru) and a mixture thereof, the catalyst is dispersed on the supporting material through a substrate, e.g. a paste, which is a hydrophobic paste with a thermal conductive property and the supporting material is a porous element having a relatively higher specific surface area for facilitating the combustion, for example, γ-alumina, titania, zirconia, or commercial oxidation catalysts, silica, DASH220 or N200.

In accordance with another aspect of the present invention, a method for dispersing a noble metal catalyst used in a catalytic combustion is further provided. The method includes steps of providing the noble metal catalyst, mixing the catalyst into a substrate, and dispersing the substrate with the catalyst on a supporting material, thereby a specific surface area of the catalyst being increased so as to facilitate the catalytic combustion.

In accordance with further another aspect of the present invention, a substance for a catalytic combustion is disclosed. The substance includes a boron nitride supported noble metal catalyst for catalyzing the combustion, a substrate for suspending the catalyst, and a supporting material for dispersing the substrate with the catalyst for increasing a total surface area of the catalyst, thereby the catalytic combustion is initiated within a short time, e.g. 15-30 minutes.

In accordance with additional aspect of the present invention, a catalyst for catalytic combustion is disclosed. The catalyst includes a boron nitride support and a noble metal, wherein the noble metal is dispersed on a surface of the boron nitride support. A specific surface area of the catalyst ranges from 1 to 200 m²/g, and a loading of the noble metal ranges from 0.1 to 5.0 wt%.

The above objects and advantages of the present invention will become more readily apparent to those ordinarily skilled in the art after reviewing the following detailed description and accompanying drawings, in which:

Fig. 1A is a schematic view showing a reactor system for the catalytic combustion according to the present invention;

Fig. 1B is a sectional drawing showing a catalytic bed of the reactor in Fig. 1A according to the present invention;

Fig. 2 is a temperature profile showing a catalytic combustion of methanol using various oxidation catalysts and oxygen/methanol ratio=1.65 with WHSV=3.2 to start from room temperature, wherein T₁ represents the temperature at the peak and T₂ represents the temperature at the steady;

Fig. 3 is a temperature profile showing a catalytic combustion of n-hexane with Pt/BN-N-220 and an O₂/n-Hexane=10.65 according to the present invention;

Fig. 4 is a schematic view showing a double jacket stainless steel reactor for the catalytic combustion of methanol fuel to initiate a steam reforming reaction of methanol according to the present invention; and

Fig. 5 is a temperature profile of a 10 hours duration test showing a catalytic combustion with a catalyst of PtBN/N220, MeOH= 0.4 mL/min, Air= 2 L/min, WHSV= 3.2, O₂/C= 1.65 to start from room temperature after 10 hours on stream operation, wherein T₁ represents the temperature at the peak and T₂ represents the temperature at the steady.

The invention is described more specifically with reference to the following embodiments. It is to be noted that the following descriptions of preferred embodiments of this invention are presented herein for the purpose of illustration and description only; it is not intended to be exhaustive or to be limited to the precise form disclosed.

The purpose of rapidly inducing a catalytic combustion according to the present invention is achieved by a supported noble metal catalyst, preferably a boron nitride (BN) supported noble metal catalyst.

The advantages of using BN as a catalyst support for oxidation reaction are described below.

(a) The physical or chemical properties of the interface support (BN) are stable at high temperature because of its high thermal stability.

(b) No hot spot will develop by exothermic oxidation reaction because of high thermal conductivity of support (BN). Thus, the clusters of noble metal, which is supported on support (BN), won't be sintered during reaction. The catalyst activity can be maintained for a longer time.

(c) The catalyst is not damaged by acidic or basic agents because of chemical inertness of the BN.

(d) Moisture cannot condense inside the pores of this interface support (BN) because of its hydrophobicity. Therefore, the surface of catalyst won't be covered by moisture to hinder further catalytic reaction, and the oxidation activity is enhanced.

A BN supported noble metal catalyst is used to completely oxidize organic compounds to water and carbon dioxide. BN is a white flake-type powder compound in appearance which can be purchased on the commercial market. The noble metal is selected from a group consisting of platinum (Pt), palladium (Pd), rhodium (Rh), Ruthenium (Ru) and a mixture thereof, preferably Pt. The noble metal is dispersed on the surface of BN, and the loading is from 0.1 to 5.0 wt%. The specific surface area of BN supported noble metal catalyst is from 1 to 200 m²/g, preferably from 30 to 80 m²/g.

The noble metal is dispersed on the surface of BN by the so called "incipient wetness technique". For better soaking on the hydrophobic BN support, an organic solvent of alcohols, preferably methanol is chosen as the diluting solvent. The quantity of methanol required to completely fill the pore volume of support (BN) is predetermined. A noble metal complex compound of Pt, Pd, Rh or Ru, preferably in hexachloride or its amine salt, e.g., H₂PtCl₆ · H₂O, is dissolved in methanol resulting in a Pt-methanol solution.

For use in the catalytic combustion, this BN dispersed noble metal catalyst described above is uniquely designed and fabricated by the use of an active metal on a hydrophobic paste and thereafter this pasted noble metal catalyst is further dispersed on a stable high surface area supporting material, wherein the paste functions as an interface substrate for facilitating the further dispersion of the catalyst onto the supporting material. Thus, through the high surface area supporting material, it will be easier for the catalyst to contact with the fuel so as to increase the reaction rate. Hence, a porous supporting material, such as a γ-alumina, might be a great solution which has a high surface area and also in a stable state. Additionally, the hydrophobic substrate is chosen to reduce the chemisorption of water molecule and to prevent the water from competing an active catalyst site and blocking the chemisorption of the fuel molecule on the active metal. Moreover, this substrate compound is an excellent thermal conductive material and is capable of dispersing the exothermal heat from the active metal site. Therefore, this design makes a rapid oxidation possible.

### EXAMPLE 1: Preparation of supported Pt/BN catalyst

One gram (1 g) of H₂PtCl₆ · 6H₂O [Hexachloroplatinic acid hexahydrate] was dissolved in a small quantity of methanol to form a total volume of 12 cc. This solution is then added drop wise onto 10 g of h-boron nitride. The incipient dry mass was then heated at 70°C to dry under an infrared lamp (250W). It was then transferred into an 9.75mmOD steel reactor tube and heated at 300°C with an air flow of 15 c.c./min for 2 hr. The BET surface area of the catalyst was 49 M²/g.

### EXAMPLE 2: Preparation of the supported Pt/BN catalyst on the supporting material

Five gram (5 g) of a stable porous supporting material in sizes of 8-16 mesh, such as γ-alumina or an industrial oxidation catalyst itself was added with small volume of methanol equivalent to pore volume of the support. Then, one gram (1 g) of the above catalyst, Pt/BN, was suspended in 3 cc of methanol, and the paste was then dispersed onto the supporting material under mild stirring with a glass rod. The mixture is first dried at 70°C under an infrared lamp and then further heated to 300°C under an air stream of 15 c.c./min for two hours (2hr). The BET surface area of this supported catalyst, Pt/BN/g-Al₂O₃, was 170 M²/g.
The same procedure was used to prepare a host of supported Pt/BN with two commercial oxidation catalysts, N220 and DASH-220. The surface properties are shown in Table 1.

**Table 1**

| **Surface properties of supported Pt/BN catalysts** | | | | | | |
|---|---|---|---|---|---|---|
| Catalyst | Before oxidation reaction | | | 30 Hr after oxidation reaction | | |
| | BET area | Pore vol. | Pore size | BET area | Pore vol. | Pore size |
| | M²/g | cc/g | Å | M²/g | cc/g | Å |
| Pt/BN | 39.4 | 0.16 | 165.3 | 37.9 | 0.18 | 191.8 |
| Pt/BN/γ-Alumina^{a} | 169.4 | 0.45 | 107.3 | 144.4 | 0.42 | 116.2 |
| Pt/BN/DASH220^{b} | 135.5 | 0.38 | 112.1 | 85.5 | 0.34 | 160.7 |
| Pt/BN/N220^{c} | 126.5 | 0.34 | 117.4 | 100 | 0.36 | 142.1 |

| | | | | | | |
|---|---|---|---|---|---|---|
| ^{a}γ-Alumina has a BET area of 188.2 M²/g, pore vol. Of 0.49 cc/g and pore size of 105 Å. | | | | | | |
| ^{b} DASH220 was from NE Chemcat Corp. (www.ne-chemcat.co.jp) and has a Pt content of 0.2 wt% on alumina with BET are of 150 M²/g, pore vol. of 0.55 cc/g, and pore size of 119 Å. | | | | | | |
| ^{c} N220 was from Süd Chemie Catalyst Japan, Inc. (www.sued-chemie-japan.co.jp) and has a Pt content of 0.2 wt% on alumina with BET are of 150 M²/g, pore vol. of 0.42 cc/g and pore size of 130 Å. | | | | | | |

### EXAMPLE 3: Cold started catalytic combustion of methanol with Pt/BN/Support

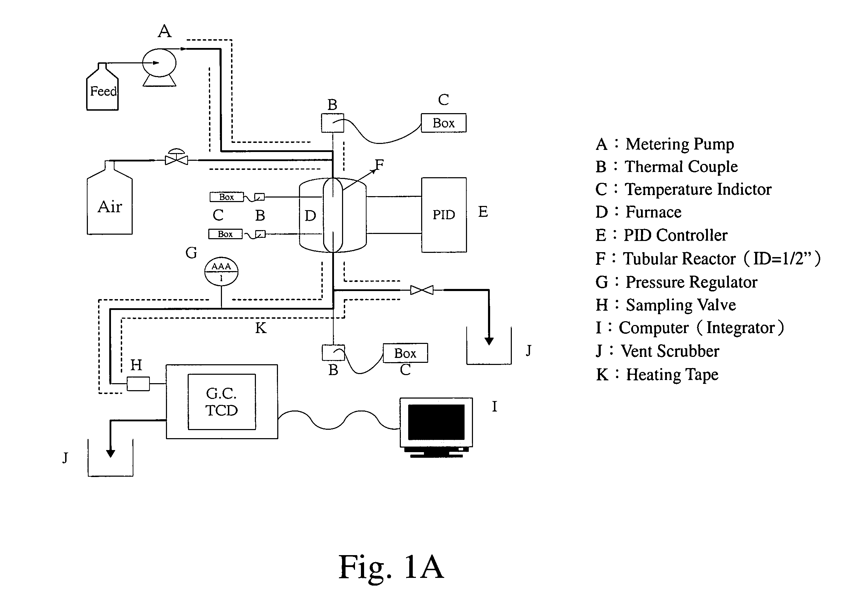

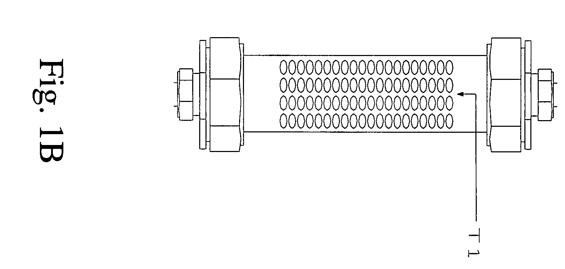

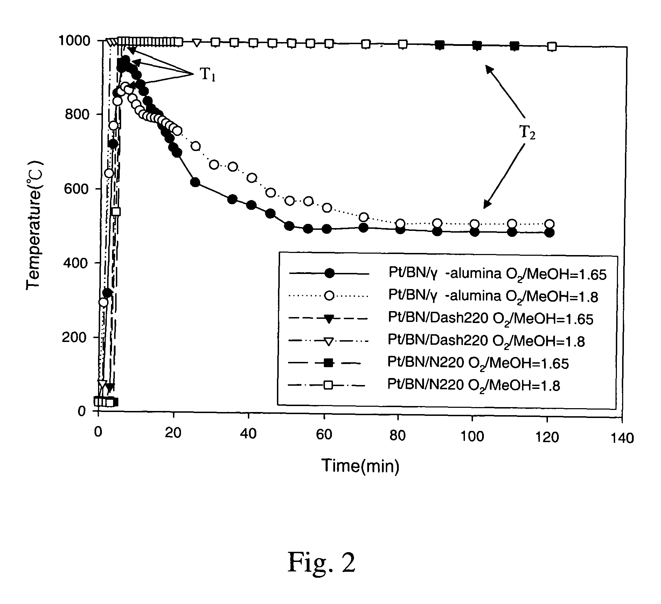

In this series of tests, 6 g of supported Pt/BN catalyst shown in Example 2 (1g of Pt/BN on 5 g of support) were filled in a stainless steel tubular reactor of 10 mmID x 250 mmL placed in an insulated oven without any external heating facility, as shown in Fig. 1. An appropriate amount of liquid methanol corresponding to the required WHSV of methanol was injected through a metering pump and air was fed upstream of methanol at room temperature. The reaction temperature surged up rapidly from room temperature to a peak temperature, T₁, over 800°C within 3 to 6 min and then maintained at a steady temperature, T₂ of 450°C to 1000°C depending upon the nature of support and the value of WHSV. Three catalysts were made using γ-alumina and two commercial Pt/alumina oxidation catalysts, N220 and DASH-220 of Slid Chemie Catalysts Japan, Inc and N.E. Chemtac Corp. of Japan, respectively, as the support for Pt/BN and were tested for their temperature rise in the catalytic combustion of methanol. The results of these catalytic combustion reactions are shown in Fig 2, Table 2 and Table 3 for T₁ and T₂.

**Table 2**

| **Catalytic combustion of methanol with WHSV= 2.4**^{**#**} | | | |
|---|---|---|---|
| Catalysts at O₂/CH₃OH= | T₁ (°C) | T₂ (°C) | Time to T₁ (min) |
| Pt/BN/g-Alumina 1.65 | 800 | 443 | 6 |
| Pt/BN/g-Alumina 1.80 | 811 | 485 | 6 |
| Pt/BN/DASH220 1.65 | >1000 | 886 | 5 |
| Pt/BN/DASH220 1.80 | >1000 | 945 | 3 |
| Pt/BN/N220 1.65 | >1000 | >1000 | 4 |
| Pt/BN/N220 1.80 | >1000 | >1000 | 3 |

| | | | |
|---|---|---|---|
| **# These catalytic reactions were started from room temperature** | | | |

**Table 3**

| **Catalytic combustion of methanol with WHSV= 3.2**^{**#**} | | | |
|---|---|---|---|
| Catalysts at O₂/CH₃OH= | T₁ (°C) | T₂ (°C) | Time to T₁ (min) |
| Pt/BN/g-Alumina 1.65 | 947 | 500 | 6 |
| Pt/BN/g-Alumina 1.80 | 875 | 550 | 6 |
| Pt/BN/DASH220 1.65 | >1000 | >1000 | 4 |
| Pt/BN/DASH220 1.80 | >1000 | >1000 | 3 |
| Pt/BN/N220 1.65 | >1000 | >1000 | 6 |
| Pt/BN/N220 1.80 | >1000 | >1000 | 5 |

| | | | |
|---|---|---|---|
| # These catalytic reactions were started from room temperature | | | |

### EXAMPLE 4 Catalytic combustion of n-hexane with Pt/BN-N-220

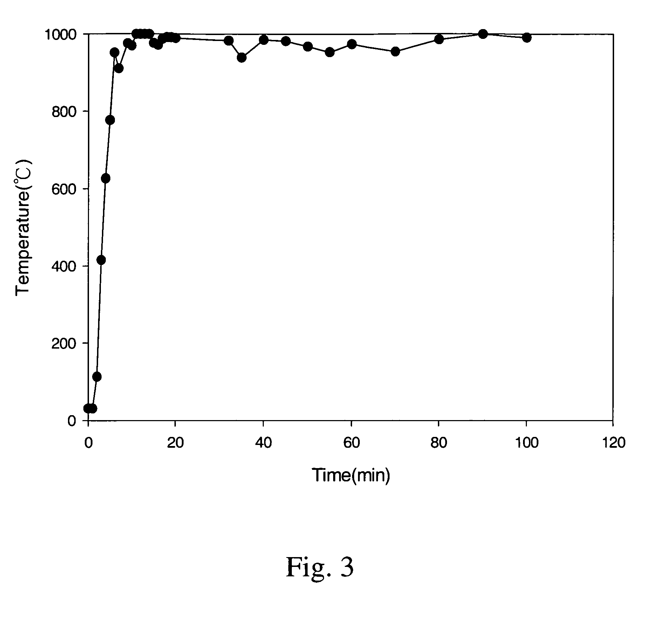

With an O₂/n-Hexane=10.65 (10% exceed the theoretical oxygen demand from air), n-hexane 9.96 g/hr was fed at room temperature onto 6 g of Pt/BN-N-220 catalyst which was made as shown in Example 2 with a space velocity of WHSV=1.66. The reaction temperature rose to 850°C in 6 min and 999 in 10 min and maintained at a steady temperature of 980-970°C. The temperature profile of catalyst zone is shown in Fig. 3.

### EXAMPLE 5 Catalytic combustion of fuel to start up a steam reforming reaction.

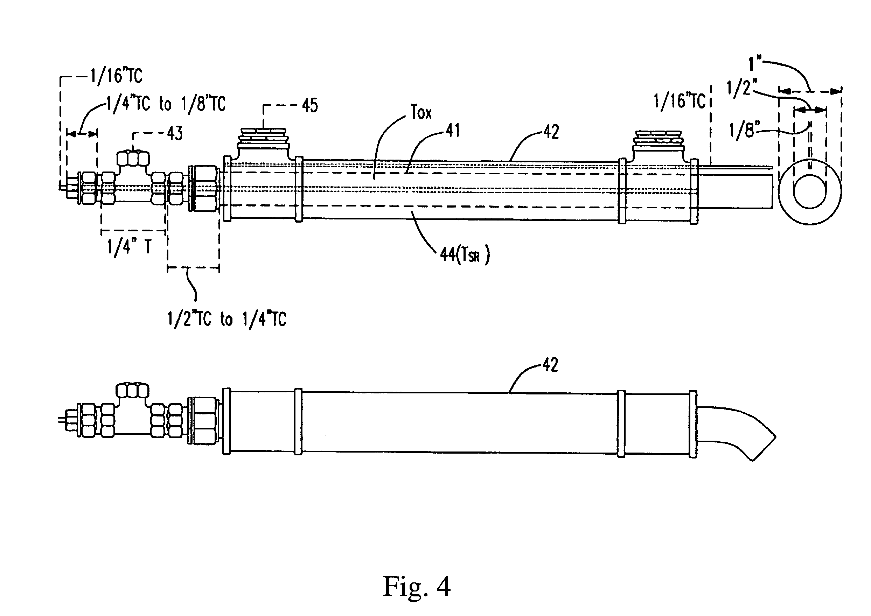

In a double jacket stainless steel reactor, as shown in Fig 4, the reactor is composed of an inner tube 41 of 13 mmOD x 300 mmL containing 12 g of Pt/BN-γ-Al₂O₃ and a jacket 42 of 25 mmID x 32 mmL containing 160 g of CuOZnO catalyst (G-66B of Süd Chemie Catalyst Japan, Inc). The reactor was wrapped with mineral wool for insulation (not shown). Both the inner reactor and the jacket reactor were independently connected with delivery pumps (not shown) for feeding combustion fuel and raw material to reformer, respectively. Methanol fuel, 7.5 mmol/min or WHSV= 2.4, was firstly injected into the combustion catalyst zone through an inlet 43 for oxidation and then, within 12 minutes, the bed temperature, Tₒₓ, rose to 560°C while the temperature in the steam reforming zone 44, T_{SR}, shoot up to 360°C simultaneously. The steam reforming reaction of methanol was set on with the injection of raw material mixture, 7.5 mmol/min of methanol and 9 mmol/min of water and hydrogen and carbon dioxide mixture evolved from the side tube 45. After maintaining steady for another 60 min, the methanol fuel for catalytic combustion was changed to the same aqueous methanol mixture, MeOH: 6.7 mmol/min and H₂O: 8 mmol/min and immediately T_{OX} and T_{SR} dropped to 460°C and 310°C, respectively. The reaction is allowed to continue for another 40 minutes smoothly before shut down.

### EXAMPLE 6 Ten hours life test of catalytic combustion with Pt/BN/N220

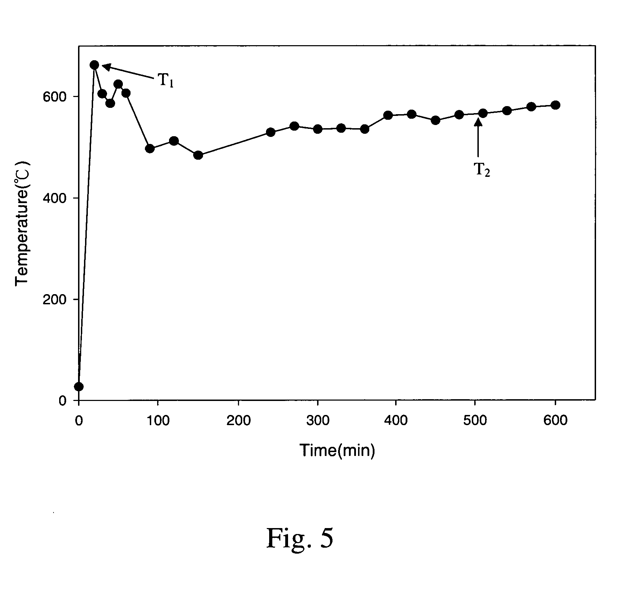

In this experiment, a catalytic combustion with a catalyst of PtBN/N220, MeOH= 0.4 mL/min, Air= 2 L/min, WHSV= 3.2, O₂/C= 1.65 is started from room temperature and is undergone a 10-hours on-streaming operation. The result is shown in Fig. 5, wherein T₁ represents the temperature at the peak and T₂ represents the temperature at the steady.

In view of aforesaid, the catalytic combustion according to the present invention can easily achieve a desired high temperature within a very short time and maintain at a steady temperature for a long time. Furthermore, the fuel does not need to be preheated for shortening the initiating time, namely, the fuel can start at room temperature. Moreover, as shown in EXAMPLE 3, the desired reaction temperature or the steady temperature, T₂, can be controlled by choosing proper catalyst, space time, WHSV, and oxygen/methanol ratio. Therefore, through these features described above, the present invention can be easily employed for supplying the heat to an industrial reactor or facilities.

## Claims

1. A process of a catalytic combustion, comprising steps of:
providing a fuel at a first temperature; and
contacting the fuel with a noble metal catalyst dispersed on a supporting material so as to raise to a second temperature sufficient to initiate the combustion, **characterized in that** a raising time from the first temperature to the second temperature is within 30 minutes.

2. The catalyst according to claim 1, **characterized in that** the fuel is one of a mixture of water and alcohol and a single alcohol.

3. The catalyst according to claim 2, **characterized in that** the alcohol is one selected from a group consisting of a methanol, an ethanol and an isopropanol.

4. The catalyst according to claim 1, **characterized in that** the fuel is one of a mixture of hydrocarbon and alcohol and a single hydrocarbon.

5. The catalyst according to claim 4, **characterized in that** the hydrocarbon is one selected from a group consisting of a methane, a liquid petroleum gas (LPG), a gasoline, a hexane and an naphtha oil.

6. The process according to claim 1, **characterized in that** the noble metal catalyst is a boron nitride supported noble metal catalyst.

7. The process according to claim 1, **characterized in that** the noble metal is selected from a group consisting of platinum (Pt), palladium (Pd), rhodium (Rh), Ruthenium (Ru) and a mixture thereof.

8. The process according to claim 1, **characterized in that** the catalyst is dispersed on the supporting material through a substrate.

9. The process according to claim 1, **characterized in that** the substrate is a paste.

10. The process according to claim 9, **characterized in that** the paste is a hydrophobic paste.

11. The process according to claim 10, **characterized in that** the paste is made of a thermal conductive material.

12. The process according to claim 1, **characterized in that** the first temperature is room temperature.

13. The process according to claim 1, **characterized in that** the second temperature is in the range from 500 to 1000°C.

14. The process according to claim 1, **characterized in that** the supporting material is a porous material having a relatively higher specific surface area and pore volume for facilitating the combustion.

15. The method according to claim 1, **characterized in that** the supporting material is one selected from a group consisting of γ-alumina, titania, zirconia, silica, DASH220 and N200.

16. A method for dispersing a noble metal catalyst used in a catalytic combustion, comprising steps of:
providing the noble metal catalyst;
mixing the catalyst into a substrate; and
dispersing the substrate with the catalyst on a supporting material,
thereby a specific surface area of the catalyst being increased so as to facilitate the catalytic combustion.

17. The method according to claim 16, **characterized in that** the catalyst is a boron nitride supported noble metal catalyst.

18. The method according to claim 17, **characterized in that** the noble metal is selected from a group consisting of platinum (Pt), palladium (Pd), rhodium (Rh), Ruthenium (Ru) and a mixture thereof.

19. The method according to claim 16, **characterized in that** the substrate is a paste.

20. The method according to claim 19, **characterized in that** the paste is a hydrophobic paste.

21. The method according to claim 20, **characterized in that** the paste is made of a thermal conductive material.

22. The method according to claim 16, **characterized in that** the supporting material is a porous element having a relatively higher specific surface area.

23. The method according to claim 16, **characterized in that** the supporting material is one selected from a group consisting of γ-alumina, titania, zirconia, silica, DASH220 and N200.

24. A substance for a catalytic combustion, comprising:
a boron nitride supported noble metal catalyst for catalyzing the combustion;
a substrate for suspending the catalyst; and
a supporting material for dispersing the substrate with the catalyst for
increasing a total surface area of the catalyst, thereby the catalytic combustion being initiated within 30 minutes.

25. The catalyst according to claim 24, **characterized in that** the noble metal is selected from a group consisting of platinum (Pt), palladium (Pd), rhodium (Rh), Ruthenium (Ru) and a mixture thereof.

26. The method according to claim 24, **characterized in that** the substrate is a paste.

27. The method according to claim 24, **characterized in that** the supporting material is a porous element having a relatively higher specific surface area.

28. A catalyst for catalytic combustion as claimed in claim 1 comprising a boron nitride support and a noble metal, **characterized in that** the noble metal is dispersed on a surface of the boron nitride support.

29. The catalyst according to claim 28, **characterized in that** a specific surface area of the catalyst ranges from 1 to 200 m²/g.

30. The catalyst according to claim 28, **characterized in that** a loading of the noble metal ranges from 0.1 to 5.0 wt%.

31. The catalyst according to claim 28, **characterized in that** the noble metal is selected from a group consisting of platinum (Pt), palladium (Pd), rhodium (Rh), Ruthenium (Ru) and a mixture thereof.

32. The catalyst according to claim 28, **characterized in that** the fuel is one of a mixture of water and alcohol and a single alcohol.

33. The catalyst according to claim 32, **characterized in that** the alcohol is one selected from a group consisting of a methanol, an ethanol or an isopropanol.

34. The catalyst according to claim 28, **characterized in that** the fuel is one of a mixture of hydrocarbon and alcohol and a single hydrocarbon.

35. The catalyst according to claim 34, **characterized in that** the hydrocarbon is one selected from a group consisting of a methane, a liquid petroleum gas (LPG), a gasoline, a hexane and an naphtha oil.
